# EUROPEAN PATENT SPECIFICATION

(11) **EP 4 191 718 B1**
(45) Date of publication and mention of the grant of the patent: **02.07.2025**
(21) Application number: 21850370.4
(22) Date of filing: 15.07.2021
(51) Int. Cl.: H01M 8/04, H01M 8/04029, H01M 8/0432, H01M 8/04701, H01M 8/04746, H01M 8/10

(54) **FUEL CELL SYSTEM**
BRENNSTOFFZELLENSYSTEM
SYSTÈME DE PILE À COMBUSTIBLE

(30) Priority: 31.07.2020 JP 2020130378
(43) Date of publication of application: 07.06.2023
(73) Proprietor: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: MATSUOKA, Kei, Tokyo 105-0023 (JP); SATO, Yosuke, Tokyo 105-0023 (JP); ISHII, Ena, Tokyo 105-0023 (JP); YOSHINAGA, Norihiro, Tokyo 105-0023 (JP); YAMASHITA, Kyohei, Kawasaki-shi, Kanagawa 212-0013 (JP)
(74) Representative: Hoffmann Eitle
(86) International application number: PCT/JP2021/026586
(87) International publication number: WO 2022/024779

(56) References cited:
- WO-A1-2017/145068
- JP-A- 2006 236 734
- JP-A- 2007 234 519
- JP-A- 2007 234 519
- JP-A- 2020 087 631
- JP-A- H1 064 561
- US-A1- 2016 133 971
- US-A1- 2019 006 686

## Description

### FIELD

Embodiments disclosed herein relate to a fuel cell system.

### BACKGROUND

A fuel cell system includes a fuel cell stack in which a plurality of fuel cell units are stacked. The fuel cell unit has an electrolyte film intervening between a fuel electrode and an air electrode. In the fuel cell unit, a fuel electrode gas containing hydrogen is supplied to the fuel electrode and air is supplied to the air electrode (oxidant electrode), whereby an electrochemical reaction occurs to generate electricity.

### PRIOR ART DOCUMENT

### PATENT DOCUMENT

Patent Document 1: Japanese Patent Application Laid-open No. 2006-236734

WO 2017/145068 A1 describes a fuel cell propulsion system for submarine and US 2010/019729 A1 a power system for an unmanned surface vehicle.

### SUMMARY OF THE INVENTION

### PROBLEMS TO BE SOLVED BY THE INVENTION

A fuel cell system is sometimes used as a power source or the like in a boat moving on the sea, for example. The fuel cell system is installed on a deck of the boat, for example. In such a case, when an ambient temperature drops at the time of halting of the fuel cell, there is a possibility that cooling water used for cooling the fuel cell freezes.

In order to prevent freezing of the cooling water, heating by using a heater has been conventionally performed. However, in such a case, power consumption is large and many devices are necessary.

Under the circumstances stated above, it has been conventionally difficult to perform antifreeze of cooling water easily and efficiently.

Therefore, the problem to be solved by the present invention is to provide a fuel cell system which can perform antifreeze of cooling water easily and efficiently.

### MEANS FOR SOLVING THE PROBLEMS

A fuel cell system of an embodiment includes a fuel cell section, and has: a cooling water circulation system in which cooling water circulates via the fuel cell section; a heat exchange system to perform heat exchange between seawater and the cooling water circulating in the cooling water circulation system; and a control section to control the heat exchange. The control section heats the cooling water by the heat exchange when a temperature regarding the cooling water circulation system is equal to or lower than a first threshold value and a temperature of the seawater used for the heat exchange in the heat exchange system is equal to or higher than a second threshold value which is higher than the first threshold value.

### BRIEF DESCRIPTION OF THE DRAWINGS

[Fig. 1] Fig. 1 is a diagram schematically illustrating an entire configuration of a fuel cell system according to a first embodiment.
[Fig. 2] Fig. 2 is a perspective view schematically illustrating an entire configuration of a fuel cell section in the first embodiment.
[Fig. 3] Fig. 3 is a cross-sectional view illustrating in enlargement a part of a cross-section of the fuel cell section in the first embodiment.
[Fig. 4] Fig. 4 is a diagram schematically illustrating an entire configuration of a fuel cell system according to a second embodiment.
[Fig. 5] Fig. 5 is a diagram schematically illustrating an entire configuration of a fuel cell system according to a third embodiment.
[Fig. 6] Fig. 6 is a diagram schematically illustrating an entire configuration of a fuel cell system according to a fourth embodiment.

### DETAILED DESCRIPTION

### <First Embodiment>

### [A] Configuration

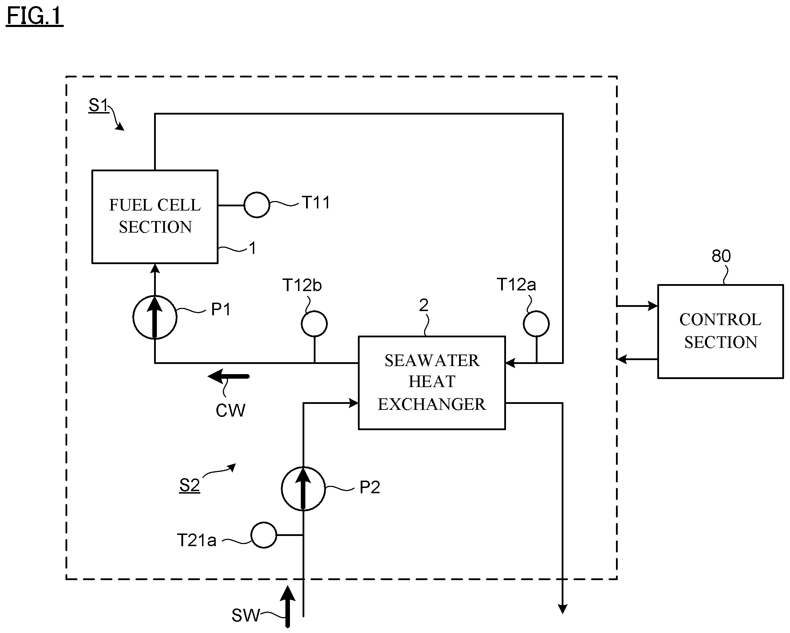

Fig. 1 is a diagram schematically illustrating an entire configuration of a fuel cell system according to a first embodiment.

The fuel cell system of this embodiment includes a fuel cell section 1 as illustrated in Fig. 1. Further, the fuel cell system has a cooling water circulation system S1, a heat exchange system S2, and a control section 80. The fuel cell system of this embodiment is used as a power source or the like in a boat moving on the sea, for example, and installed on a deck of the boat. Each part constituting the fuel cell system will be described in sequence.

### [A-1] Fuel cell section 1

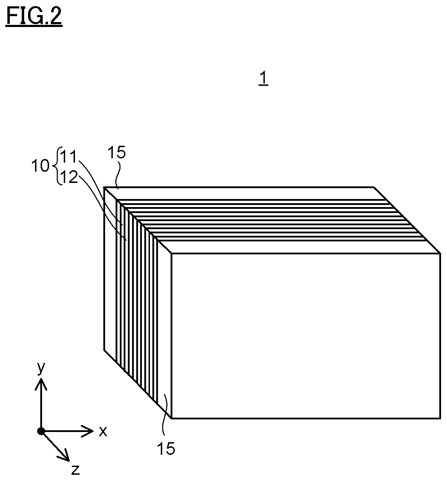

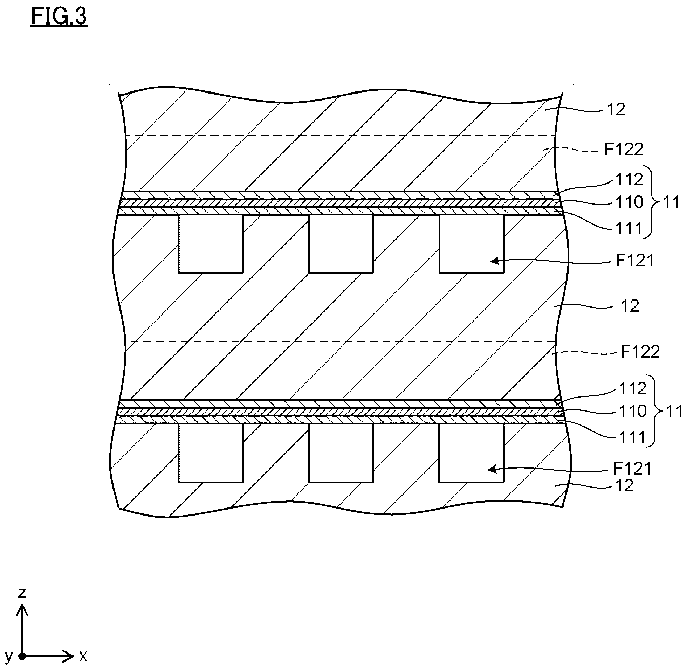

First, an example of the fuel cell section 1 constituting the fuel cell system will be described by using Fig. 2 and Fig. 3.

Fig. 2 is a perspective view schematically illustrating an entire configuration of the fuel cell section in the first embodiment. Fig. 3 is a cross-sectional view illustrating in enlargement a part of a cross-section of the fuel cell section in the first embodiment. In Fig. 2, a y-axis runs along a vertical direction, a z-axis runs along a first horizontal direction, and an x-axis runs along a second horizontal direction which is orthogonal to the first horizontal direction. Fig. 3 shows a part of a cross-section corresponding to a horizontal surface (xz-surface) in Fig. 2.

The fuel cell section 1 has a fuel cell stack 10, as illustrated in Fig. 2. The fuel cell stack 10 includes a plurality of fuel cell units 11 and a plurality of separators 12, the fuel cell units 11 and the separators 12 being stacked alternately in a stack direction. The fuel cell stack 10 intervenes between a pair of fastening plates 15 (end plates) in the stack direction, and the pair of fastening plates 15 are fastened by using a fastening member (not shown) such as a tie rod and a band.

### [A-1-1] Fuel cell unit 11

In the fuel cell stack 10, the fuel cell unit 11 is a polyelectrolyte type fuel cell unit, and includes a polyelectrolyte film 110, a fuel electrode 111, and an air electrode 112 as illustrated in Fig. 3. The fuel cell unit 11 is a film/electrode joined body in which the polyelectrolyte film 110 intervenes between the fuel electrode 111 and the air electrode 112.

The polyelectrolyte film 110 is constituted by a fluorine-based polymeric material which has a sulfonic acid group, for example. The fuel electrode 111 and the air electrode 112 are constituted by a platinum catalyst being supported by a carbon black support, for example.

### [A-1-2] Separator 12

In the fuel cell stack 10, the separator 12 is constituted by a porous body formed of a conductive material. In the separator 12, a fuel electrode gas flow path F121 and an air electrode gas flow path F122 are formed.

The fuel electrode gas flow path F121 is formed on a surface of a fuel electrode 111 side in the separator 12. The fuel electrode gas flow path F121 is formed to run along the vertical direction (y-axis direction) and a fuel electrode gas to be supplied to the electrode 111 of the fuel cell unit 11 flows therein. The fuel electrode gas flow paths F121 are plurally provided, a plurality of the fuel electrode gas flow paths F121 being provided with an interval in the second horizontal direction (x-axis direction).

The air electrode gas flow path F122 is formed on a surface of an air electrode 112 side in the separator 12. The air electrode gas flow path F122 is formed to run along the second horizontal direction (x-axis direction) which is orthogonal to the first horizontal direction (z-axis direction) along the stack direction, and an air electrode gas to be supplied to the air electrode 112 of the fuel cell unit 11 flows therein. The air electrode gas flow paths F122 are provided plurally, though not illustrated, a plurality of the air electrode gas flow paths F122 being provided with an interval in the first horizontal direction (y-axis direction).

### [A-2] Cooling water circulation system S1

The cooling water circulation system S1 is configured so that cooling water CW circulates via the fuel cell section 1, as illustrated in Fig. 1.

Here, the cooling water circulation system S1 has a cooling water pump P1. The cooling water pump P1 is installed in order to supply the cooling water CW to the fuel cell section 1.

The cooling water CW is pure water, for example, and is supplied from up above in the vertical direction (y-axis direction) and discharged downward in the fuel cell section 1. More specifically, the cooling water CW flows into the inside of a micropore of the separator 12 constituted of the porous body. The cooling water CW is supplied at a pressure lower than a pressure of the fuel electrode gas and a pressure of the air electrode gas. Thereby, generated water generated by an electricity generation reaction in the fuel cell section 1 and condensate water condensed inside the fuel cell section 1 can be removed to the outside of the fuel cell section 1 and cooling by humidification and latent heat of vaporization of the polyelectrolyte film 110 can be performed.

### [A-3] Heat exchange system

The heat exchange system S2 is provided in order to perform heat exchange between seawater SW and the cooling water CW circulating in the cooling water circulation system S1, as illustrated in Fig. 1.

Here, the heat exchange system S2 has a seawater heat exchanger 2 and a seawater pump P2. The seawater heat exchanger 2 is installed in order to perform heat exchange between the seawater SW and the cooling water CW circulating in the cooling water circulation system S1. The seawater pump P2 is installed in order to supply the seawater SW to the seawater heat exchanger 2. The heat exchange system S2 is a seawater circulation system, and is configured so that the seawater SW pumped up from the sea (not shown) by using the seawater pump P2 returns to the sea after passing through the seawater heat exchanger 2.

### [A-4] Control section 80

The control section 80 is provided in order to control heat exchange between the seawater SW and the cooling water CW, as illustrated in Fig. 1. Though not shown, the control section 80 includes an arithmetic unit (not shown) and a memory device (not shown), and is configured so that the arithmetic unit performs arithmetic processing by using a program which the memory device stores. In the control section 80, temperature data or the like detected by temperature sensors T11, T12a, T12b, and T21a is input as input signals, and the control section 80 outputs control signals obtained by performing arithmetic processing based on the input signals to respective sections, to thereby controls actions of the respective sections.

Here, the control section 80 controls heat exchange between the seawater SW and the cooling CW so that a temperature of the fuel cell section 1 becomes a temperature designated in advance. For example, in a case where the fuel cell section 1 is normally operated, if a temperature of the cooling water CW for cooling the fuel cell section 1 is equal to or larger than a value designated in advance, the control section 80 controls heat exchange between the seawater SW and the cooling water CW so that the seawater SW cools the cooling water CW.

Further, in this embodiment, the control section 80 is configured to heat the cooling water CW by using heat of the seawater SW when an antifreeze operation to prevent freezing of the cooling water CW is carried out. More specifically, the control section 80 heats the cooling water CW by increasing a heat exchange amount by heat exchange when a temperature regarding the cooling water circulation system S1 is equal to or lower than a first threshold value TH1 and when a temperature of the seawater SW used for heat exchange in the heat exchange system S2 is equal to or higher than a second threshold value TH2 which is higher than the first threshold value TH1 (TH1 < TH2).

The first threshold value TH1 is 3 to 4°C, for example, and the control section 80 determines whether or not the temperature is equal to or lower than the first threshold value TH1, based on the temperature data measured by the temperature sensor T11 which detects the temperature of the fuel cell section 1. Further, the second threshold value TH2 is 5 to 10°C, for example, and the control section 80 determines whether or not the temperature is equal to or higher than the second threshold value TH2, based on the temperature data measured by the temperature sensor T21a which detects the temperature of the seawater SW pumped up by the seawater pump P2.

The control section 80 drives at least one of the cooling water pump P1 and the seawater pump P2 to thereby increase the heat exchange amount by heat exchange. In other words, the control section 80 increases a discharge amount of at least one of the cooling water pump P1 and the seawater pump P2, to thereby increase the heat exchange amount by heat exchange between the cooling water CW and the seawater SW.

At this time, the control section 80 controls at least one action of the cooling water pump P1 and the seawater pump P2 so that a temperature difference between a cooling water inflow temperature regarding the cooling water CW flowing into the seawater heat exchanger 2 and a cooling water outflow temperature regarding the cooling water CW flowing out of the seawater heat exchanger 2 becomes a set temperature difference set in advance. The cooling water inflow temperature is measured by the temperature sensor T12a, and the cooling water outflow temperature is measured by the temperature sensor T12b. The control section 80 performs control so that the heat exchange amount by heat exchange between the cooling water CW and the seawater SW becomes larger as the temperature difference between the cooling water inflow temperature and the cooling water outflow temperature is largely apart from the set temperature difference set in advance.

### [B] Summary

As described above, in the fuel cell system of this embodiment, when there is a possibility that the cooling water CW freezes, the cooling water CW is heated by using heat of the seawater SW which has a higher temperature than the cooling water CW. Therefore, this embodiment is able to perform antifreeze of the cooling water CW easily and efficiently.

In the fuel cell system of this embodiment, in order to improve a power generation performance, it is necessary to decrease a proton resistance of the polyelectrolyte film 110 by increasing a water content of the polyelectrolyte film 110 since the fuel cell unit 11 is the polyelectrolyte type (internally humified type) fuel cell unit. Therefore, the cooling water CW is supplied, not only for cooling, but also to humidify the polyelectrolyte film. Thus, the cooling water CW is preferably pure water which does not have an adverse effect on the fuel cell unit 11, and it is not suitable to use antifreeze liquid which has an adverse effect on the fuel cell unit 11. Therefore, when the fuel cell unit 11 is the polyelectrolyte type fuel cell unit, it is preferable to perform antifreeze of the cooling water CW by heating the cooling water CW by the seawater SW which has the temperature higher than that of the cooling water CW, as in this embodiment.

### <Second Embodiment>

### [A] Configuration

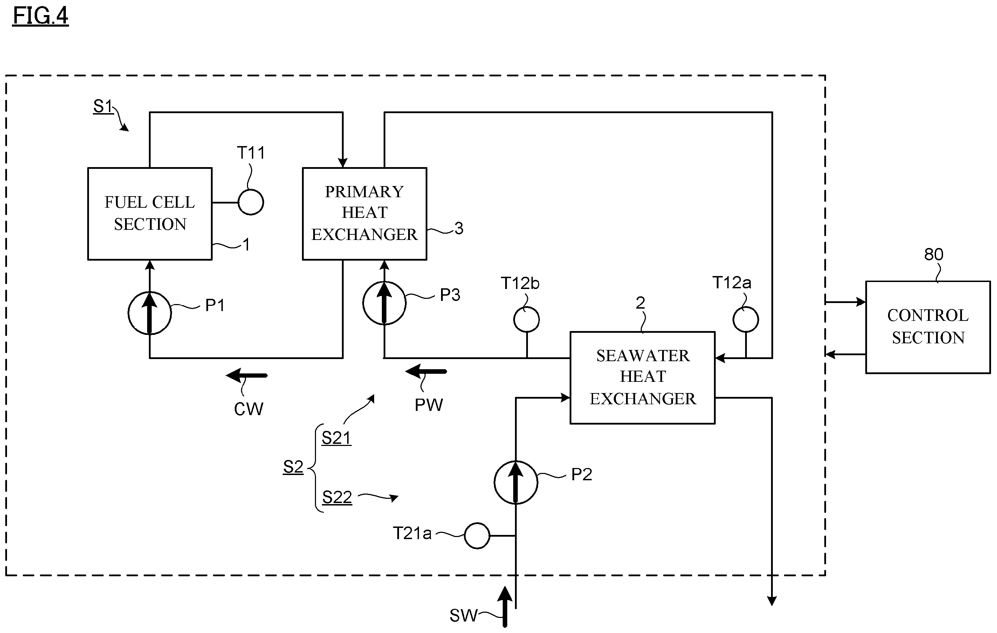

Fig. 4 is a diagram schematically illustrating an entire configuration of a fuel cell system according to a second embodiment.

As illustrated in Fig. 4, in the fuel cell system of this embodiment, a configuration of a heat exchange system S2 is different from that of the first embodiment (see Fig. 1). This embodiment is the same as the first embodiment except for the point above and a point related thereto. Therefore, overlapping explanation will be properly omitted.

In this embodiment, the heat exchange system S2 includes a heat exchange medium circulation system S21 and a seawater circulation system S22.

In the heat exchange system S2, the heat exchange medium circulation system S21 is configured so that a heat exchange medium PW to perform heat exchange between cooling water CW and the heat exchange medium PW circulates therein. The heat exchange medium circulation system S21 has a primary heat exchanger 3 and a heat exchange medium pump P3. The primary heat exchanger 3 is installed in order to perform heat exchange between the heat exchange medium PW and the cooling water CW. The heat exchange medium pump P3 is installed in order to provide the heat exchange medium PW to the primary heat exchanger 3. The heat exchange medium PW is water, for example.

In the heat exchange system S2, the seawater circulation system S22 has a seawater exchanger 2 and a seawater pump P2. The seawater heat exchanger 2 is installed in order to perform heat exchange between seawater SW and the heat exchange medium PW circulating in the heat exchange medium circulation system S21. The seawater pump P2 is installed in order to provide the seawater SW to the seawater heat exchanger 2. The seawater circulation system S22 is configured so that the seawater SW pumped up from the sea (not shown) by using the seawater pump P2 returns to the sea after passing through the seawater exchanger 2.

A control section 80 is configured to heat the cooling water CW by using heat of the seawater SW in order to prevent freezing of the cooling water CW, similarly to the first embodiment. In other words, the control section 80 heats the cooling water CW by increasing a heat exchange amount by heat exchange when a temperature regarding the cooling water circulation system S1 is equal to or lower than a first threshold value TH1 and when a temperature of the seawater SW used for heat exchange in the heat exchange system S2 is equal to or higher than a second threshold value TH2 which is higher than the first threshold value TH1 (TH1 < TH2), similarly to the first embodiment.

In this embodiment, the control section 80 drives at least one of a cooling water pump P1, the seawater pump P2, and the heat exchange medium pump P3 to thereby increase the heat exchange amount by heat exchange. In other words, the control section 80 increases a discharge amount of at least one of the seawater pump P2 and the heat exchange medium pump P3 to thereby increase the heat exchange amount by heat exchange between the heat exchange medium PW and the seawater SW. Further, by increasing the discharge amount of at least one of the cooling water pump P1 and the heat exchange medium pump P3, the control section 80 increases the heat exchange amount by heat exchange between the cooling water CW and the heat exchange medium PW. As described above, in this embodiment, freezing of the cooling water CW is prevented by performing heat exchange between the cooling water CW and the seawater SW via the heat exchange medium PW.

At this time, the control section 80 controls at least one action of the cooling water pump P1, the seawater pump P2, and the heat exchange medium pump P3 so that a temperature difference between a heat exchange medium inflow temperature regarding the heat exchange medium PW flowing into the seawater heat exchanger 2 and a heat exchange medium outflow temperature regarding the heat exchange medium PW flowing out of the seawater heat exchanger 2 becomes a set temperature difference set in advance. The heat exchange medium inflow temperature is measured by a temperature sensor T12a, and the heat exchange medium outflow temperature is measured by a temperature sensor T12b. The control section 80 performs control so that the heat exchange amount by heat exchange between the heat exchange medium PW and the seawater SW becomes larger as the temperature difference between the heat exchange medium inflow temperature and the heat exchange medium outflow temperature is largely apart from the set temperature difference set in advance.

### [B] Summary

As described above, in the fuel cell system of this embodiment, freezing of the cooling water CW is prevented by performing heat exchange between the cooling water CW and the seawater SW via the heat exchange medium PW. Therefore, this embodiment is able to perform antifreeze of the cooling water CW easily and efficiently. Note that in this embodiment, in a case where the heat exchange medium PW is pure water, even if the primary heat exchanger 3 is broken to cause mixing of the heat exchange medium PW with the cooling water CW, the fuel cell section 1 is not damaged. In the case of the first embodiment, there is a possibility that the seawater heat exchanger 2 is broken to cause mixing of the seawater SW with the cooling water CW, thereby damaging the fuel cell section 1. This embodiment has an effect on decreasing the above-described possibility.

### <Third Embodiment>

### [A] Configuration

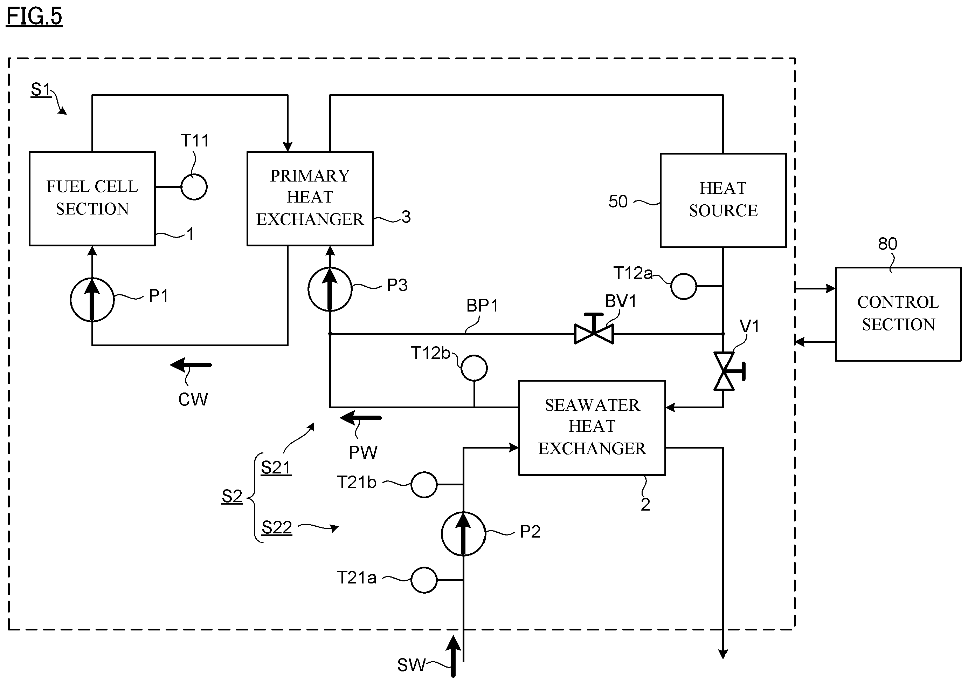

Fig. 5 is a diagram schematically illustrating an entire configuration of a fuel cell system according to a third embodiment.

As illustrated in Fig. 5, in the fuel cell system of this embodiment, a heat exchange system S2 includes a heat exchange medium circulation system S21 and a seawater circulation system S22, similarly to the second embodiment (see Fig. 4). However, this embodiment is different from the second embodiment (see Fig. 4) in a part of a configuration of the heat exchange medium circulation system S21 and the seawater circulation system S22. This embodiment is the same as the second embodiment except for the point described above and a point related thereto. Therefore, overlapping explanation will be properly omitted.

In this embodiment, the heat exchange medium circulation system S21 further has, as illustrated in Fig. 5, a heat source 50 (first heat source), a seawater heat exchanger bypass flow path BP1 (first seawater heat exchanger bypass flow path), a seawater heat exchanger bypass valve BV1 (first seawater heat exchanger bypass valve), and a seawater heat exchanger inlet valve V1.

In the heat source 50, a heat exchange medium PW discharged from a primary heat exchanger 3 flows. The heat source 50 is, for example, a storage battery storing electric power generated in a fuel cell section 1. The heat source 50 may be a device such as an inverter, a refrigeration cycle condenser, and a heat exchanger of a cooling medium (chiller).

The seawater heat exchanger bypass flow path BP1 is configured so that the heat exchange medium PW flowing out of the heat source 50 takes a detour around a seawater heat exchanger 2 and flows into the primary heat exchanger 3.

The seawater heat exchanger bypass valve BV1 is provided in the seawater heat exchanger bypass flow path BP1.

The seawater heat exchanger inlet valve V1 is provided on a downstream side of an entrance of the seawater heat exchanger bypass flow path BP1 and on an upstream side of the seawater heat exchanger 2, in a flow path of the heat exchange medium PW flowing from the heat source 50 into the seawater heat exchanger 2.

In this embodiment, a temperature sensor T12a for measuring a heat exchange medium inflow temperature is installed on an upstream side of the entrance of the seawater heat exchanger bypass flow path BP1 in a flow of the heat exchange medium PW.

Further, in this embodiment, a temperature sensor T21b for measuring a seawater inflow temperature regarding seawater SW flowing into the seawater heat exchanger 2 is installed between the seawater heat exchanger 2 and a seawater pump P2.

Additionally, in this embodiment, a control section 80 further controls an action of the seawater heat exchanger bypass valve BV1 and an action of the seawater heat exchanger inlet valve V1 to thereby adjust heat exchange between cooling water CW and the seawater SW which is performed via the heat exchange medium PW.

More specifically, in an activation operation of a fuel cell section 1, the control section 80 opens the seawater heat exchanger bypass valve BV1 and closes all the seawater heat exchanger inlet valves V1 when driving of a heat exchange medium pump P3 is started. Thereafter, when a temperature measured by a temperature sensor T11 detecting a temperature of the fuel cell section 1 rises to an operating temperature (for example, 60°C to 80°C) of the fuel cell section 1, the control section 80 closes all the seawater heat exchanger bypass valves BV1 and opens the seawater heat exchanger inlet valve V1. Thereby, the activation operation of the fuel cell section 1 can be finished promptly.

In implementation of an antifreeze operation, in a case where a measured temperature t12a of the temperature sensor T12a is equal to or higher than a measured temperature t21b of the temperature sensor T21b (t21a ≥ t21b), the control section 80 opens the seawater heat exchanger bypass valve BV1 and closes all the seawater heat exchanger inlet valves V1. Thereby, the heat exchange medium PW flows to the primary heat exchanger 3 by the heat exchange medium pump P3 through the seawater heat exchanger bypass flow path BP1 without running through the seawater heat exchanger 2.

Meanwhile, in implementation of the antifreeze operation, in a case where the measured temperature t12a of the temperature sensor T12a is lower than the measured temperature t21b of the temperature sensor T21b (t21a < t21b), the control section 80 closes all the seawater heat exchanger bypass valves BV1 and opens the seawater heat exchanger inlet valve V1. Thereby, the heat exchange medium PW flows to the primary heat exchanger 3 by the heat exchange medium pump P3 through the seawater heat exchanger 2 without running through the seawater heat exchanger bypass flow path BP1.

### [B] Summary

As described above, in the fuel cell system of this embodiment, similarly to the second embodiment, freezing of the cooling water CW is prevented by performing heat exchange between the cooling water CW and the seawater SW via the heat exchange medium PW. Therefore, this embodiment is able to perform antifreeze of the cooling water CW easily and efficiently.

Further, in this embodiment, since the action of the seawater exchanger bypass valve BV1 and the action of the seawater heat exchanger inlet valve V1 are controlled in the activation operation of the fuel cell section 1, as described above, the activation operation can be finished promptly.

Further, in this embodiment, since heat of the heat source 50 is properly used as described above in implementation of the antifreeze operation, antifreeze can be performed effectively.

### <Fourth Embodiment>

### [A] Configuration

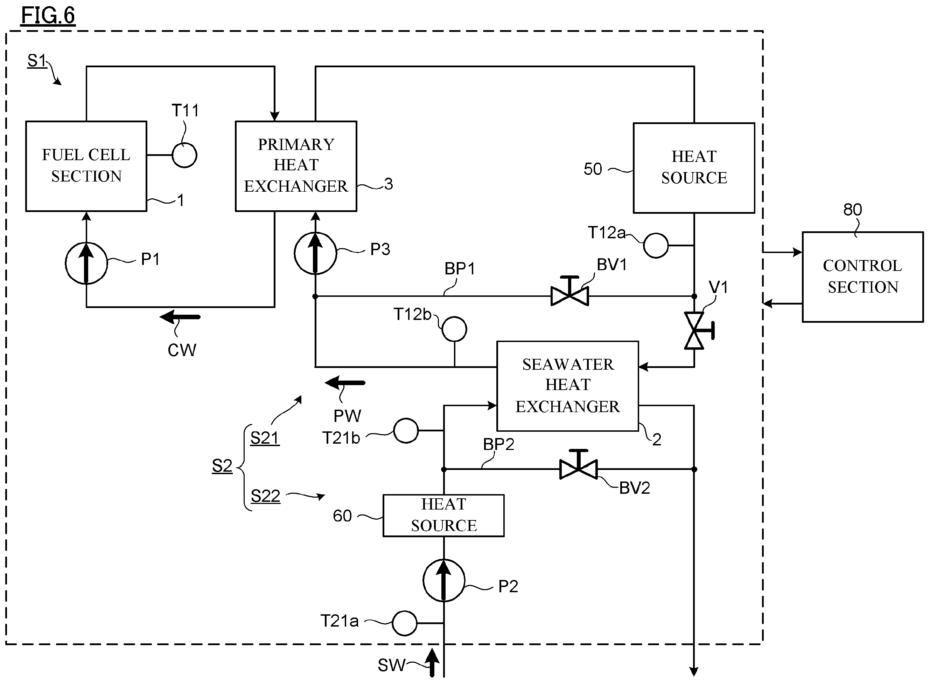

Fig. 6 is a diagram schematically illustrating an entire configuration of a fuel cell system according to a fourth embodiment.

As illustrated in Fig. 6, in the fuel cell system of this embodiment, similarly to the third embodiment (see Fig. 5), a heat exchange system S2 includes a heat exchange medium circulation system S21 and a seawater circulation system S22. However, in this embodiment, a part of a configuration of the seawater circulation system S22 is different from that of the third embodiment (see Fig. 4). This embodiment is the same as the third embodiment except for the point described above and a point related thereto. Therefore, overlapping explanation will be properly omitted.

In this embodiment, the seawater circulation system S22 further has, as illustrated in Fig. 6, a heat source 60 (second heat source), a seawater heat exchanger bypass flow path BP2 (second seawater heat exchanger bypass flow path), and a seawater heat exchanger bypass valve BV2 (second seawater heat exchanger bypass valve).

In the heat source 60, seawater SW discharged from a seawater pump P2 flows. The heat source 60 is a device such as a refrigeration cycle condenser and a heat exchanger of a cooling medium (chiller).

The seawater heat exchanger bypass flow path BP2 is configured so that the seawater SW flowing out of the heat source 60 flows taking a detour around a seawater heat exchanger 2.

The seawater heat exchanger bypass valve BV2 is provided in the seawater heater exchanger bypass flow path BP2.

Further, in this embodiment, a temperature sensor T21b for measuring a seawater inflow temperature regarding the seawater SW flowing into the seawater heat exchanger 2 is installed between an entrance of the seawater heat exchanger bypass flow path BP2 and the seawater heat exchanger 2.

Additionally, in this embodiment, a control section 80 further controls an action of the seawater heat exchanger bypass valve BV2 to thereby adjust heat exchange between cooling water CW and the seawater SW which is performed via a heat exchange medium PW.

More specifically, in implementation of a normal operation of a fuel cell section 1, the control section 80 increases a discharge amount of the seawater pump P2 and opens the seawater heat exchanger bypass valve BV2 when a measured temperature t21b of the temperature sensor T21b is higher than a set temperature (for example, 20°C to 40°C) set in advance. Thereby, even in a case where a temperature of the seawater SW flowing out of the heat source 60 by heat exchange in the heat source 60 is higher than a set temperature, it is possible to properly keep a heat exchange amount in the seawater heat exchanger 2. It is possible to prevent an increase in a load of the pump due to flowing of an excessive flow amount to the seawater heat exchanger 2 and it is possible to optimize the heat exchange amount.

In implementation of an antifreeze operation, the control section 80 makes all the seawater heat exchanger bypass valves BV2 closed, in principle. Then, in a case where a measured temperature t12a of a temperature sensor T12a is equal to or lower than a measure temperature t21b of the temperature sensor T21b (t12a ≤ t21b), the control section 80 continues driving of the seawater pump P2 until a measured temperature t11 of a temperature sensor T11 becomes equal to or higher than a set temperature (for example, 10°C) at which cooling water CW does not freeze.

In a case where the measured temperature t12a of the temperature sensor T12a is higher than the measured temperature t21b of the temperature sensor T21b (t12a > t21b), the control section 80, though driving the seawater pump P2, opens a seawater heater exchanger bypass valve BV1 and closes a seawater heat exchanger inlet valve V1. In other words, in the seawater exchanger 2, heat exchange between the heat exchange medium PW and the seawater SW is not performed.

In a case where the measured temperature t21b (temperature of the heat exchange medium PW flowing out of the heat source 60) measured by the temperature sensor T21b is higher than a set temperature set in advance, the control section 80 increases a flow amount of the seawater pump P2 and controls an action of the seawater heat exchanger bypass valve BV2 so that the measured temperature t21b becomes the set temperature.

### [B] Summary

As described above, in the fuel cell system of this embodiment, similarly to the third embodiment, freezing of the cooling water CW is prevented by performing heat exchange between the cooling water CW and the seawater SW via the heat exchange medium PW. Therefore, this embodiment is able to perform antifreeze of the cooling water CW easily and efficiently.

Further, in this embodiment, in implementation of the normal operation of the fuel cell section 1, an action of the seawater pump P2 and the action of the seawater heater exchanger bypass valve BV2 are controlled, as described above. Therefore, as described above, it is possible to properly keep the heat exchange amount in the seawater heat exchanger 2.

Further, in this embodiment, since heat of the heat source 60 is properly used in implementation of the antifreeze operation as described above, antifreeze can be performed effectively.

### [C] Modification Example

In this embodiment, similarly to the third embodiment (see Fig. 5), a case is described where the heat exchange medium circulation system S21 has the heat source 50, the seawater heat exchanger bypass flow path BP1, the seawater heat exchanger bypass valve BV1, and the seawater heat exchanger inlet valve V1, but the configuration is not limited to the above. The heat exchange medium circulation system S21 is not necessarily required to be provided with the heat source 50, the seawater heat exchanger bypass flow path BP1, the seawater heat exchanger bypass valve BV1, and the seawater heat exchanger inlet valve V1.

### <Others>

While certain embodiments have been described above, these embodiments have been presented by way of example only, and are not intended to limit the scope of the inventions.

### EXPLANATION OF REFERENCE NUMERALS

1: fuel cell section, 2: seawater heat exchanger, 3: primary heat exchanger, 10: fuel cell stack, 11: fuel cell unit, 12: separator, 15: fastening plate, 50 heat source (first heat source), 60: heat source (second heat source), 80: control section, 110: polyelectrolyte film, 111: fuel electrode, 112: air electrode, BP1: seawater exchanger bypass flow path (first seawater heat exchanger bypass flow path), BP2: seawater exchanger bypass flow path (second seawater heat exchanger bypass flow path), BV1: seawater heat exchanger bypass valve (first seawater heat exchanger bypass valve), BV2: seawater heat exchanger bypass valve (second seawater heat exchanger bypass valve), CW: cooling water, F121: fuel electrode gas flow path, F122: air electrode gas flow path, P1: cooling water pump, P2: seawater pump, P3: heat exchange medium pump, PW: heat exchange medium, S1: cooling water circulation system, S2: heat exchange system, S21: heat exchange medium circulation system, S22: seawater circulation system, SW: seawater, T11: temperature sensor, T12a: temperature sensor, T12b: temperature sensor, T21a: temperature sensor, T21b: temperature sensor, V1: seawater heat exchanger inlet valve

## Claims

1. A fuel cell system including a fuel cell section, the fuel cell system comprising:
a cooling water circulation system in which cooling water circulates via the fuel cell section;
a heat exchange system for performing heat exchange between seawater and the cooling water circulating in the cooling water circulation system; and
a control section for controlling the heat exchange, wherein
the control section heats the cooling water by the heat exchange when a temperature regarding the cooling water circulation system is equal to or lower than a first threshold value and a temperature of the seawater used for the heat exchange in the heat exchange system is equal to or higher than a second threshold value which is higher than the first threshold value.

2. The fuel cell system according to claim 1, wherein
the cooling water circulation system has:
a cooling water pump for supplying the cooling water to the fuel cell section,
the heat exchange system has:
a seawater heat exchanger for performing heat exchange between the seawater and the cooling water circulating in the cooling water circulation system; and
a seawater pump for supplying the seawater to the seawater heat exchanger, and
the control section drives at least one of the cooling water pump and the seawater pump to thereby increase a heat exchange amount by the heat exchange.

3. The fuel cell system according to claim 2, wherein
the control section controls at least one action of the cooling water pump and the seawater pump so that a temperature difference between a cooling water inflow temperature of the cooling water flowing into the seawater heat exchanger and a cooling water outflow temperature of the cooling water flowing out of the seawater heat exchanger becomes a set temperature set in advance.

4. The fuel cell system according to claim 1, wherein
the cooling water circulation system has:
a cooling water pump for supplying the cooling water to the fuel cell section,
the heat exchange system has:
a heat exchange medium circulation system in which a heat exchange medium to perform heat exchange between the heat exchange medium and the cooling water circulates;
a seawater heat exchanger for performing heat exchange between the heat exchange medium and the seawater; and
a seawater pump for supplying the seawater to the seawater heat exchanger, and
the heat exchange medium circulation system has:
a primary heat exchanger for performing heat exchange between the heat exchange medium and the primary heat exchanger; and
a heat exchange medium pump for supplying the heat exchange medium to the primary heat exchanger, and
the control section drives at least one of the cooling water pump, the seawater pump, and the heat exchange medium pump to thereby increase a heat exchange amount by the heat exchange.

5. The fuel cell system according to claim 4, wherein
the control section controls at least one action of the cooling water pump, the seawater pump, and the heat exchange medium pump so that a temperature difference between a heat exchange medium inflow temperature of the heat exchange medium flowing into the seawater heat exchanger and a heat exchange medium outflow temperature of the heat exchange medium flowing out of the seawater heat exchanger becomes a set temperature difference set in advance.

6. The fuel cell system according to claim 4 or claim 5, wherein
the heat exchange medium circulation system has:
a first heat source in which the heat exchange medium discharged from the primary heat exchanger flows;
a first seawater heat exchanger bypass flow path in which the heat exchange medium flowing out of the first heat source flows to the primary heat exchanger taking a detour around the seawater heat exchanger;
a first seawater heat exchanger bypass valve provided in the first seawater heat exchanger bypass flow path; and
a seawater heat exchanger inlet valve provided on a downstream side of an entrance of the seawater heat exchanger bypass flow path and on an upstream side of the seawater heat exchanger in a flow path of the heat exchange medium flowing from the first heat source into the seawater heat exchanger, and
the control section further controls an action of the first seawater heat exchanger bypass valve and an action of the seawater heat exchanger inlet valve to thereby adjust the heat exchange.

7. The fuel cell system according to any one of claim 4 to claim 6, wherein
the heat exchange system has:
a second heat source into which the seawater discharged from the seawater pump flows;
a second seawater heat exchanger bypass flow path in which the seawater flowing out of the second heat source flows making a detour around the seawater heat exchanger; and
a second seawater heat exchanger bypass valve provided in the second seawater heat exchanger bypass flow path, and
the control section further controls an action of the second seawater heat exchanger bypass valve to thereby adjust the heat exchange.

## Patentansprüche

1. Brennstoffzellensystem mit einem Brennstoffzellenabschnitt, wobei das Brennstoffzellensystem aufweist:
ein Kühlwasserkreislaufsystem, in dem Kühlwasser durch den Brennstoffzellenabschnitt zirkuliert;
ein Wärmetauschsystem zum Durchführen von Wärmetausch zwischen Meerwasser und dem Kühlwasser, das in dem Kühlwasserkreislaufsystem zirkuliert; und
einen Steuerungsabschnitt zum Steuern des Wärmetauschs, wobei
der Steuerungsabschnitt das Kühlwasser durch den Wärmetausch aufwärmt, wenn eine Temperatur bezüglich des Kühlwasserkreislaufsystems gleich oder niedriger ist als ein erster Grenzwert und eine Temperatur des für den Wärmetausch in dem Wärmetauschsystem eingesetzten Meerwassers gleich oder höher ist als ein zweiter Grenzwert, der größer ist als der erste Grenzwert.

2. Brennstoffzellensystem nach Anspruch 1, wobei
das Kühlwasserkreislaufsystem aufweist:
eine Kühlwasserpumpe zum Zuführen des Kühlwassers zu dem Brennstoffzellenabschnitt,
wobei das Wärmetauschsystem aufweist:
einen Meerwasserwärmetauscher zum Durchführen von Wärmetausch zwischen dem Meerwasser und dem Kühlwasser, das in dem Kühlwasserkreislaufsystem zirkuliert; und
eine Meerwasserpumpe zum Zuführen des Meerwassers zu dem Meerwasserwärmetauscher, und
der Steuerungsabschnitt zumindest eine der Kühlwasserpumpe und der Meerwasserpumpe antreibt, um dadurch eine Wärmetauschmenge durch den Wärmetausch zu erhöhen.

3. Brennstoffzellensystem nach Anspruch 2, wobei
der Steuerungsabschnitt zumindest eine Aktion der Kühlwasserpumpe und der Meerwasserpumpe steuert, sodass ein Temperaturunterschied zwischen einer Kühlwassereinströmtemperatur des Kühlwassers, das in den Meerwasserwärmetauscher einströmt, und einer Kühlwasserausströmtemperatur des Kühlwassers, das aus dem Meerwasserwärmetauscher ausströmt, eine im Voraus festgelegte Temperatur wird.

4. Brennstoffzellensystem nach Anspruch 1, wobei
das Kühlwasserkreislaufsystem aufweist:
eine Kühlwasserpumpe zum Zuführen des Kühlwassers zu dem Brennstoffzellenabschnitt,
das Wärmetauschsystem aufweist:
ein Wärmetauschmediumkreislaufsystem, in dem ein Wärmetauschmedium zum Durchführen von Wärmetausch zwischen dem Wärmetauschmedium und dem Kühlwasser zirkuliert;
einen Meerwasserwärmetauscher zum Durchführen von Wärmetausch zwischen dem Wärmetauschmedium und dem Meerwasser; und
eine Meerwasserpumpe zum Zuführen von Meerwasser zu dem Meerwasserwärmetauscher, und
das Wärmetauschmediumkreislaufsystem aufweist:
einen primären Wärmetauscher zum Durchführen von Wärmetausch zwischen dem Wärmetauschmedium und dem primären Wärmetauscher; und
eine Wärmetauschmediumpumpe zum Zuführen des Wärmetauschmediums zu dem primären Wärmetauscher, und
der Steuerungsabschnitt zumindest eine der Kühlwasserpumpe, der Meerwasserpumpe und der Wärmetauschmediumpumpe antreibt, um dadurch eine Wärmetauschmenge durch Wärmetausch zu erhöhen.

5. Brennstoffzellensystem nach Anspruch 4, wobei
der Steuerungsabschnitt zumindest eine Aktion der Kühlwasserpumpe, der Meerwasserpumpe und der Wärmetauschmediumpumpe steuert, sodass ein Temperaturunterschied zwischen einer Wärmetauschmediumeinströmtemperatur des Wärmetauschmediums, das in den Meerwasserwärmetauscher einströmt, und einer Wärmetauschmediumausströmtemperatur des Wärmetauschmediums, das aus dem Meerwasserwärmetauscher ausströmt, ein im Voraus festgelegter Temperaturunterschied wird.

6. Brennstoffzellensystem nach Anspruch 4 oder 5, wobei
das Wärmetauschmediumkreislaufsystem aufweist:
eine erste Wärmequelle, in der das Wärmetauschmedium strömt, das aus dem primären Wärmetauscher abgeführt wird;
einen ersten Meerwasserwärmetauscher-Bypass-Strömungspfad, in dem das Wärmetauschmedium, das aus der ersten Wärmequelle ausströmt, zu dem primären Wärmetauscher strömt, wobei es einen Umweg um den Meerwasserwärmetauscher nimmt;
ein erstes Meerwasserwärmetauscher-Bypass-Ventil, das in dem ersten Meerwasserwärmetauscher-Bypass-Strömungspfad vorgesehen ist; und
ein Meerwasserwärmetauschereinlassventil, das an einer stromabwärtigen Seite eines Eingangs des Meerwasserwärmetauscher-Bypass-Strömungspfads und an einer stromaufwärtigen Seite des Meerwasserwärmetauschers in einem Strömungspfad des Wärmetauschmediums vorgesehen ist, das von der ersten Wärmequelle in den Meerwasserwärmetauscher einströmt, und
der Steuerungsabschnitt ferner eine Aktion des ersten Meerwasserwärmetauscher-Bypass-Strömungsventils und eine Aktion des Meerwasserwärmetauschereinlassventils steuert, um dadurch den Wärmetausch anzupassen.

7. Brennstoffzellensystem nach einem der Ansprüche 4 bis 6, wobei
das Wärmetauschsystem aufweist:
eine zweite Wärmequelle, in die das Meerwasser einströmt, das von der Meerwasserpumpe abgeführt wird;
einen zweiten Meerwasserwärmetauscher-Bypass-Strömungspfad, in dem das Meerwasser strömt, das aus der zweiten Wärmequelle ausströmt, wobei es einen Umweg um den Meerwasserwärmetauscher macht; und
ein zweites Meerwasserwärmetauscher-Bypass-Ventil, das in dem zweiten Meerwasserwärmetauscher-Bypass-Strömungspfad vorgesehen ist, und
der Steuerungsabschnitt ferner eine Aktion des Meerwasserwärmetauscher-Bypass-Ventils steuert, um dadurch den Wärmetausch anzupassen.

## Revendications

1. Système de pile à combustible incluant une section de pile à combustible, le système de pile à combustible comprenant :
un système de circulation d'eau de refroidissement dans lequel de l'eau de refroidissement circule par le biais de la section de pile à combustible ;
un système d'échange de chaleur permettant de réaliser un échange de chaleur entre de l'eau de mer et l'eau de refroidissement circulant dans le système de circulation d'eau de refroidissement ; et
une section de commande permettant de commander l'échange de chaleur, dans lequel
la section de commande chauffe l'eau de refroidissement par l'échange de chaleur lorsqu'une température concernant le système de circulation d'eau de refroidissement est égale ou inférieure à une première valeur seuil et qu'une température de l'eau de mer utilisée pour l'échange de chaleur dans le système d'échange de chaleur est égale ou supérieure à une seconde valeur seuil qui est supérieure à la première valeur seuil.

2. Système de pile à combustible selon la revendication 1, dans lequel
le système de circulation d'eau de refroidissement présente :
une pompe à eau de refroidissement permettant d'alimenter la section de pile à combustible en eau de refroidissement,
le système d'échange de chaleur présente :
un échangeur de chaleur d'eau de mer permettant de réaliser un échange de chaleur entre l'eau de mer et l'eau de refroidissement circulant dans le système de circulation d'eau de refroidissement ; et
une pompe à eau de mer permettant d'alimenter l'échangeur de chaleur d'eau de mer en eau de mer, et
la section de commande entraîne au moins l'une parmi la pompe à eau de refroidissement et la pompe à eau de mer pour augmenter ainsi une quantité d'échange de chaleur par l'échange de chaleur.

3. Système de pile à combustible selon la revendication 2, dans lequel
la section de commande commande au moins une action de la pompe à eau de refroidissement et de la pompe à eau de mer de sorte qu'une différence de température entre une température d'entrée d'eau de refroidissement de l'eau de refroidissement s'écoulant dans l'échangeur de chaleur d'eau de mer et une température de sortie d'eau de refroidissement de l'eau de refroidissement s'écoulant hors de l'échangeur de chaleur d'eau de mer devienne une température réglée à l'avance.

4. Système de pile à combustible selon la revendication 1, dans lequel
le système de circulation d'eau de refroidissement présente :
une pompe à eau de refroidissement permettant d'alimenter la section de pile à combustible en eau de refroidissement,
le système d'échange de chaleur présente :
un système de circulation de milieu d'échange de chaleur dans lequel circule un milieu d'échange de chaleur pour réaliser un échange de chaleur entre le milieu d'échange de chaleur et l'eau de refroidissement ;
un échangeur de chaleur d'eau de mer permettant de réaliser un échange de chaleur entre le milieu d'échange de chaleur et l'eau de mer ; et
une pompe à eau de mer permettant d'alimenter l'échangeur de chaleur d'eau de mer en eau de mer, et
le système de circulation de milieu d'échange de chaleur présente :
un échangeur de chaleur primaire permettant de réaliser un échange de chaleur entre le milieu d'échange de chaleur et l'échangeur de chaleur primaire ; et
une pompe à milieu d'échange de chaleur permettant d'alimenter l'échangeur de chaleur primaire en milieu d'échange de chaleur, et
la section de commande entraîne au moins l'une parmi la pompe à eau de refroidissement, la pompe à eau de mer et la pompe à milieu d'échange de chaleur pour augmenter ainsi une quantité d'échange de chaleur par l'échange de chaleur.

5. Système de pile à combustible selon la revendication 4, dans lequel
la section de commande commande au moins une action de la pompe à eau de refroidissement, de la pompe à eau de mer et de la pompe à milieu d'échange de chaleur de sorte qu'une différence de température entre une température d'entrée de milieu d'échange de chaleur du milieu d'échange de chaleur s'écoulant dans l'échangeur de chaleur d'eau de mer et une température de sortie de milieu d'échange de chaleur du milieu d'échange de chaleur s'écoulant hors de l'échangeur de chaleur d'eau de mer devienne une différence de température réglée à l'avance.

6. Système de pile à combustible selon la revendication 4 ou la revendication 5, dans lequel
le système de circulation de milieu d'échange de chaleur présente :
une première source de chaleur dans laquelle s'écoule le milieu d'échange de chaleur évacué de l'échangeur de chaleur primaire ;
un premier canal d'écoulement de dérivation d'échangeur de chaleur d'eau de mer dans lequel le milieu d'échange de chaleur s'écoulant hors de la première source de chaleur s'écoule vers l'échangeur de chaleur primaire en faisant un détour autour de l'échangeur de chaleur d'eau de mer ;
une première soupape de dérivation d'échangeur de chaleur d'eau de mer fournie dans le premier canal d'écoulement de dérivation d'échangeur de chaleur d'eau de mer ; et
une soupape d'entrée d'échangeur de chaleur d'eau de mer fournie sur un côté aval d'une entrée du canal d'écoulement de dérivation d'échangeur de chaleur d'eau de mer et sur un côté amont de l'échangeur de chaleur d'eau de mer dans un canal d'écoulement du milieu d'échange de chaleur s'écoulant depuis la première source de chaleur dans l'échangeur de chaleur d'eau de mer, et
la section de commande commande en outre une action de la première soupape de dérivation d'échangeur de chaleur d'eau de mer et une action de la soupape d'entrée d'échangeur de chaleur d'eau de mer pour ajuster ainsi l'échange de chaleur.

7. Système de pile à combustible selon l'une quelconque de la revendication 4 à la revendication 6, dans lequel
le système d'échange de chaleur présente :
une seconde source de chaleur dans laquelle s'écoule l'eau de mer évacuée de la pompe à eau de mer ;
un second canal d'écoulement de dérivation d'échangeur de chaleur d'eau de mer dans lequel l'eau de mer s'écoulant hors de la seconde source de chaleur s'écoule en faisant un détour autour de l'échangeur de chaleur d'eau de mer ; et
une seconde soupape de dérivation d'échangeur de chaleur d'eau de mer fournie dans le second canal d'écoulement de dérivation d'échangeur de chaleur d'eau de mer, et
la section de commande commande en outre une action de la seconde soupape de dérivation d'échangeur de chaleur d'eau de mer pour ajuster ainsi l'échange de chaleur.
